# EUROPEAN PATENT APPLICATION

(11) **EP 4 819 036 A1**
(43) Date of publication of application: **07.10.2026**
(21) Application number: 24902077.7
(22) Date of filing: 28.06.2024
(51) Int. Cl.: G06T 7/00

(54) **DETECTION METHOD AND APPARATUS FOR BATTERY HOUSING, DEVICE, MEDIUM, AND PRODUCT**

(30) Priority: 14.12.2023 CN 202311728928
(71) Applicant: Contemporary Amperex Technology Co., Limited, Ningde, Fujian 352100 (CN)
(72) Inventor: JIANG, Guannan, Ningde, Fujian 352100 (CN); WANG, Zhiyu, Ningde, Fujian 352100 (CN); SHU, Annan, Ningde, Fujian 352100 (CN)
(74) Representative: Kraus & Lederer PartGmbB
(86) International application number: PCT/CN2024/102259
(87) International publication number: WO 2025/123649

(57) **Abstract**

This application discloses a detection method and apparatus for battery housing, a device, a medium, and a product. The method includes: obtaining (S110) a first image of a first corner of a battery housing, where the first corner is a rounded corner; extracting (S120) a target edge contour of a curved portion of the first corner in the first image; performing curve fitting (S130) based on a feature point of the target edge contour to obtain a target curve; and determining (S140) whether burrs are present on the first corner based on the target curve. Through curve fitting, whether burrs are present on a corner of a battery housing is more accurately detected.

## Description

### CROSS-REFERENCE TO RELATED APPLICATIONS

This application claims priority to the Chinese Patent Application No. 202311728928.7 filed on December 14, 2023, entitled "DETECTION METHOD AND APPARATUS FOR BATTERY HOUSING, DEVICE, MEDIUM, AND PRODUCT", which is incorporated herein by reference in its entirety.

### TECHNICAL FIELD

This application relates to the technical field of visual detection, and in particular, to a detection method and apparatus for battery housing, a device, a medium, and a product.

### BACKGROUND

Burrs are prone to occur at corners of a battery housing during stamping. Burrs at the corners of the battery housing lead to poor sealing performance of a battery, which may cause battery leakage and pose safety hazards.

To improve the safety of the battery, it is necessary to detect whether burrs are present at the corners of the battery housing. Therefore, a method for detecting whether burrs are present at corners of a battery housing is required.

### SUMMARY

This application provides a detection method and apparatus for battery housing, a device, a medium, and a product, to more accurately detect whether burrs are present at a corner of a battery housing through curve fitting.

According to a first aspect, this application provides a detection method for battery housing, including: obtaining a first image of a first corner of a battery housing, where the first corner is a rounded corner; extracting a target edge contour of a curved portion of the first corner in the first image; performing curve fitting based on a feature point of the target edge contour to obtain a target curve; and determining whether burrs are present on the first corner based on the target curve.

In this way, the first image of the first corner of the battery housing is obtained; then the target edge contour of the curved portion of the first corner in the first image is extracted; curve fitting is performed based on the feature point of the target edge contour to obtain the target curve; and whether burrs are present on the first corner is determined based on the target curve. In this way, whether burrs are present at a corner of the battery housing is detected more accurately through curve fitting.

In some embodiments, the performing curve fitting based on a feature point of the target edge contour to obtain a target curve includes: performing circular fitting based on two endpoints of the target edge contour to obtain a target circle; and the determining whether burrs are present on the first corner based on the target curve includes: calculating a difference between a radius of the target circle and a distance between a point on the target edge contour and a center of the target circle; and determining whether burrs are present on the first corner based on the difference corresponding to the point on the target edge contour.

In this way, through circular fitting based on the two endpoints of the target edge contour, whether burrs are present on the first corner is accurately determined based on the difference between the radius of the target circle and the distance between each point on the target edge contour and the center of the target circle.

In some embodiments, the determining whether burrs are present on the first corner based on the difference corresponding to the point on the target edge contour includes: determining that burrs are present at a first point in a case that a difference corresponding to the first point on the target edge contour is greater than a first threshold.

In this way, whether burrs are present on the first corner is accurately determined by determining whether the difference between the radius of the target circle and the distance between each point on the target edge contour and the center of the target circle exceeds the first threshold.

In some embodiments, after the calculating a difference between a radius of the target circle and a distance between a point on the target edge contour and a center of the target circle, the detection method for battery housing further includes: in a case that a difference corresponding to each point on the target edge contour is not greater than the first threshold, performing quadratic curve fitting based on a target point on the target edge contour to obtain a target quadratic curve, where the target point includes at least three points; calculating a curvature of the target quadratic curve; and determining whether burrs are present on the first corner based on the curvature.

In this way, since curvature change reflects smoothness of a curve, on the basis of determining whether burrs are present on the first corner based on the curvature of the target quadratic curve, whether small and discontinuous burrs are present on the first corner may be further detected.

In some embodiments, the determining whether burrs are present on the first corner based on the curvature includes: determining that burrs are present on an edge contour segment corresponding to the target point in a case that the curvature is greater than a second threshold.

In this way, whether small and discontinuous burrs are present on the edge contour segment is accurately determined by determining whether the curvature of the target quadratic curve exceeds the second threshold.

In some embodiments, before the performing circular fitting based on two endpoints of the target edge contour to obtain a target circle, the detection method for battery housing further includes: performing quadratic curve fitting based on a target point on the target edge contour to obtain a target quadratic curve, where the target point includes at least three points; calculating a curvature of the target quadratic curve; and the performing circular fitting based on two endpoints of the target edge contour to obtain a target circle includes: performing circular fitting based on the two endpoints of the target edge contour to obtain the target circle in a case that the curvature is not greater than a second threshold.

In this way, a curvature of the target quadratic curve not greater than the second threshold may characterize that no small and continuous burrs are present on the first corner. Therefore, the target quadratic curve may be fitted first. If no burr is detected based on the target quadratic curve, circular fitting is performed to further detect whether burrs are present on the first corner.

In some embodiments, the detection method for battery housing further includes: determining that burrs are present on an edge contour segment corresponding to the target point in a case that the curvature is greater than the second threshold.

In this way, a curvature of the target quadratic curve greater than the second threshold may characterize that small and continuous burrs are present on the first corner. Therefore, if the curvature of the target quadratic curve is greater than the second threshold, it may be determined that burrs are present on the edge contour segment corresponding to the target point without performing subsequent detection, thereby saving time and improving detection efficiency.

In some embodiments, the obtaining a first image of a first corner of a battery housing includes: obtaining a color image of the first corner of the battery housing; performing grayscale processing on the color image to obtain a second image; and performing binarization processing on the second image to obtain the first image.

In this way, the first corner in the image may be highlighted through preprocessing such as grayscale and binarization on the directly obtained color image of the first corner, thereby facilitating more accurate burr detection on the first corner of the battery housing.

In some embodiments, the extracting an edge contour of a curved portion of the first corner in the first image includes: performing edge detection on the first image to obtain a first edge contour of the first corner; removing an edge contour segment of a straight portion from the first edge contour to obtain a third image containing a second edge contour, where the second edge contour is an edge contour of the curved portion of the first corner; and determining the target edge contour based on connected components of different regions in the third image, where the target edge contour is an outer edge contour of the curved portion of the first corner.

In this way, the outer edge contour of the curved portion of the first corner may be accurately extracted through the above process, so that burr detection may be performed on the first corner more accurately based on the outer edge contour of the curved portion of the first corner.

In some embodiments, the performing edge detection on the first image to obtain a first edge contour of the first corner includes: performing edge detection on the first image based on a Canny edge detection algorithm to obtain the first edge contour of the first corner.

In this way, edge detection is performed on the first image more accurately through the Canny edge detection algorithm, thereby accurately determining the first edge contour of the first corner.

In some embodiments, the removing an edge contour segment of a straight portion from the first edge contour to obtain a third image containing a second edge contour includes: determining the edge contour segment of the straight portion from the first edge contour; and removing the edge contour segment of the straight portion from the first edge contour to obtain the third image containing the second edge contour.

In this way, the edge contour of the rounded corner region is obtained accurately through removing the edge contour segment of the straight portion from the first edge contour, which facilitates subsequent curve fitting.

In some embodiments, the determining the edge contour segment of the straight portion from the first edge contour includes: cutting the first edge contour to obtain a plurality of straight line segments; determining a plurality of first straight line segments with lengths greater than a third threshold from the plurality of straight line segments; determining a vertical line segment and a horizontal line segment from the plurality of first straight line segments; determining respective segmentation points based on the vertical line segment and the horizontal line segment to obtain two segmentation points; and determining an edge contour segment other than an edge contour segment between the two segmentation points in the first edge contour as the edge contour segment of the straight portion.

In this way, the edge contour segment of the straight portion in the first edge contour is accurately determined through the above process.

In some embodiments, the determining a vertical line segment and a horizontal line segment from the plurality of first straight line segments includes: determining the vertical line segment and the horizontal line segment from the plurality of first straight line segments based on a difference in abscissa and a difference in ordinate between two endpoints corresponding to each first straight line segment.

In this way, the vertical line segment and horizontal line segment therein are accurately determined based on the difference in abscissa and the difference in ordinate of each first straight line segment.

In some embodiments, the cutting the first edge contour to obtain a plurality of straight line segments includes: performing Hough transform on an image containing the first edge contour to obtain respective endpoint coordinates corresponding to the plurality of straight line segments; and determining the plurality of straight line segments based on the respective endpoint coordinates corresponding to the plurality of straight line segments.

In this way, the first edge contour is accurately cut into a plurality of straight line segments through Hough transform.

In some embodiments, the determining respective segmentation points based on the vertical line segment and the horizontal line segment to obtain two segmentation points includes: determining a first segmentation point based on an ordinate of a part at which a straight line containing the vertical line segment overlaps with the first edge contour; determining a second segmentation point based on an abscissa of a part at which a straight line containing the horizontal line segment overlaps with the first edge contour; and determining the first segmentation point and the second segmentation point as the two segmentation points.

In this way, the two segmentation points are determined more accurately through the above process, thereby obtaining the edge contour of the curved portion of the first corner through more accurate segmentation.

In some embodiments, the determining the target edge contour based on connected components of different regions in the third image includes: sorting connected components corresponding to different regions in the third image in descending order to obtain a connected component sequence; and determining a region corresponding to a second connected component in the connected component sequence as the target edge contour.

In this way, the outer edge contour of the curved portion of the first corner is accurately determined by sorting the connected components corresponding to different regions in the third image in descending order.

According to a second aspect, this application provides a detection apparatus for battery housing, including: an obtaining module, configured to obtain a first image of a first corner of a battery housing, where the first corner is a rounded corner; an extraction module, configured to extract a target edge contour of a curved portion of the first corner in the first image; a fitting module, configured to perform curve fitting based on a feature point of the target edge contour to obtain a target curve; and a determination module, configured to determine whether burrs are present on the first corner based on the target curve.

In this way, the first image of the first corner of the battery housing is obtained; then the target edge contour of the curved portion of the first corner in the first image is extracted; curve fitting is performed based on the feature point of the target edge contour to obtain the target curve; and whether burrs are present on the first corner is determined based on the target curve. In this way, whether burrs are present at a corner of the battery housing is detected more accurately through curve fitting.

According to a third aspect, this application provides an electronic device, where the device includes: a processor and a memory storing computer program instructions.

When the processor executes the computer program instructions, the detection method for battery housing as shown in any embodiment of the first aspect is implemented.

According to a fourth aspect, this application provides a computer storage medium, where computer program instructions are stored on the computer storage medium. When a processor executes the computer program instructions, the detection method for battery housing as shown in any embodiment of the first aspect is implemented.

According to a fifth aspect, an embodiment of this application provides a computer program product. When a processor of an electronic device executes instructions in the computer program product, the electronic device is enabled to perform the detection method for battery housing as shown in any embodiment of the first aspect.

The above description is only an overview of the technical solutions of this application. In order to understand the technical means of this application more clearly, the technical means may be implemented in accordance with the content of the specification. In order to make the above and other objectives, features and advantages of this application more obvious and understandable, specific embodiments of this application are exemplified below.

### BRIEF DESCRIPTION OF DRAWINGS

By reading the detailed description of the preferred embodiments below, various other advantages and benefits will become clear to those of ordinary skill in the art. The drawings are only used for the purpose of illustrating the preferred embodiments and are not considered as limitations to this application. Moreover, the same components are denoted by the same reference signs in all the drawings. In the drawings:
FIG. 1 is a first schematic flowchart of a detection method for battery housing provided in some embodiments of this application;
FIG. 2 is a first schematic diagram of a first image provided in some embodiments of this application;
FIG. 3 is a second schematic diagram of a first image provided in some embodiments of this application;
FIG. 4 is a second schematic flowchart of a detection method for battery housing provided in some embodiments of this application;
FIG. 5 is a schematic diagram of a burr provided in some embodiments of this application;
FIG. 6 is a second schematic flowchart of a detection method for battery housing provided in some embodiments of this application;
FIG. 7 is a third schematic flowchart of a detection method for battery housing provided in some embodiments of this application;
FIG. 8 is a schematic structural diagram of a detection apparatus for battery housing provided in some embodiments of this application; and
FIG. 9 is a schematic structural diagram of an electronic device provided in some embodiments of this application.

### DESCRIPTION OF EMBODIMENTS

The embodiments of the technical solutions of this application are described in detail below with reference to the accompanying drawings. The following embodiments are only used to illustrate the technical solutions of this application more clearly, and are therefore only used as examples and cannot be used to limit the protection scope of this application.

Unless otherwise defined, all technical and scientific terms used herein have the same meaning as commonly understood by those skilled in the art pertaining to the technical field of this application; the terms used herein are only for the purpose of describing specific embodiments and are not intended to limit this application; and the terms "include" and "comprise" and any variations thereof in the specification and claims of this application and the above description of the drawings are intended to cover non-exclusive inclusion.

In the description of the embodiments of this application, the technical terms "first", "second", and the like are only used to distinguish different objects, and cannot be understood as indications or implication of relative importance or implicit indication of a quantity, specific order or primary-secondary relationship of the indicated technical features. In the description of the embodiments of this application, "plurality" means two or more, unless otherwise clearly and specifically limited.

The reference to "embodiment" herein means that a specific feature, structure or characteristic described with reference to the embodiment may be included in at least one embodiment of this application. The appearance of the phrase in various positions in the specification does not necessarily refer to the same embodiment, nor is it an independent or alternative embodiment mutually exclusive with other embodiments. It is explicitly and implicitly understood by those skilled in the art that the embodiments described herein may be combined with other embodiments.

In the description of the embodiments of this application, the term "and/or" is only a description of an association relationship of associated objects, indicating that three relationships may exist. For example, A and/or B may indicate three situations: A exists alone, A and B exist simultaneously, and B exists alone. In addition, the character "/" in this specification generally indicates that the associated objects before and after are in an "or" relationship.

In the description of the embodiments of this application, the term "plurality" means two or more (including two), and similarly, "multiple groups" means two or more groups (including two groups), and "multiple pieces" means two or more pieces (including two pieces).

As described in the background, to improve the safety of the battery, it is necessary to detect whether burrs are present at a corner of a battery housing.

In the related art, deep learning models are usually used for burr detection on electrode sheets. However, the method using deep learning models relies on labeled data of image burrs for training. When an amount of data is not large enough, an obtained model has poor robustness and cannot be generalized to new data. Moreover, in actual situations, pictures labeled with burrs at corners of battery housings are insufficient. Therefore, the method using deep learning models is suitable for electrode sheets but not suitable for corners of battery housings.

Therefore, a method for detecting whether burrs are present at corners of a battery housing is required.

In view of the above technical problems, in the embodiments of this application, a first image of a first corner of a battery housing may be obtained; then a target edge contour of a curved portion of the first corner in the first image is extracted; curve fitting is performed based on a feature point of a target edge contour to obtain a target curve; and whether burrs are present on the first corner is determined based on the target curve. In this way, whether burrs are present at a corner of a battery housing is detected more accurately through curve fitting.

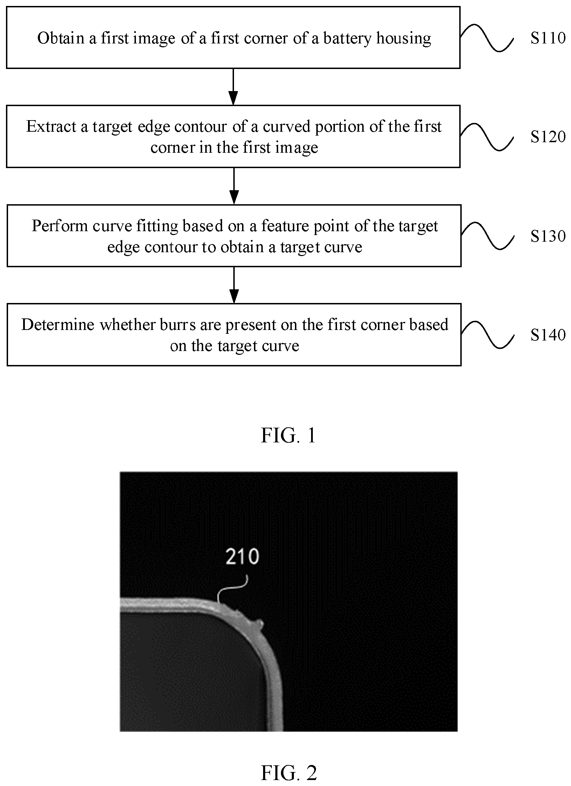

First, the detection method for battery housing provided in the embodiments of this application is described in detail with reference to FIG. 1.

FIG. 1 is a schematic flowchart of a detection method for battery housing provided in an embodiment of this application. It should be noted that the detection method for battery housing may be applied to a detection apparatus for battery housing.

As shown in FIG. 1, the detection method for battery housing may include the following steps.

S110. Obtain a first image of a first corner of a battery housing.

S120. Extract a target edge contour of a curved portion of the first corner in the first image.

S130. Perform curve fitting based on a feature point of the target edge contour to obtain a target curve.

S140. Determine whether burrs are present on the first corner based on the target curve.

In this way, the first image of the first corner of the battery housing is obtained; then the target edge contour of the curved portion of the first corner in the first image is extracted; curve fitting is performed based on the feature point of the target edge contour to obtain the target curve; and whether burrs are present on the first corner is determined based on the target curve. In this way, whether burrs are present at a corner of the battery housing is detected more accurately through curve fitting.

In S110, the first corner may be a rounded corner. For example, the first corner may be an R corner.

The battery housing includes a plurality of side plates and a connecting plate between two adjacent side plates. The plurality of side plates are arranged along a circumferential direction of an opening of the housing. The connecting plate is used to connect two adjacent side plates. At least part of an outer surface of the connecting plate includes a curved surface. The outer surface of the connecting plate mentioned herein refers to a surface of the connecting plate facing away from an electrode assembly. The outer surface of the connecting plate may be entirely curved, or only partially curved. An inner surface of the connecting plate may also include a curved surface, or may not include a curved surface. Smooth transition between two adjacent side plates is achieved through the curved surface of the connecting plate. The presence of the curved surface helps to improve flatness of the outer surface of the battery housing and improve an appearance of the battery housing. An angle formed by this curved surface is the R corner. Burrs are prone to occur at the R corner of the battery housing during stamping.

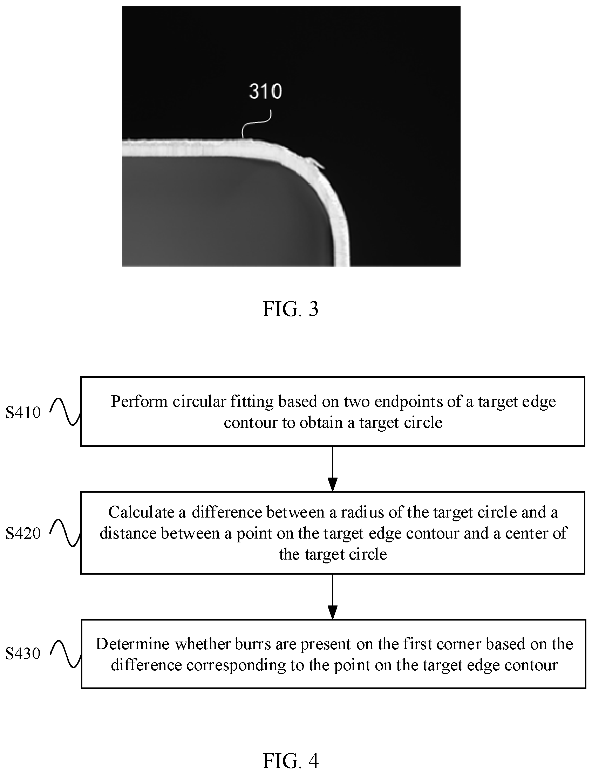

For example, the first image may be as shown in FIG. 2 or FIG. 3. FIG. 2 includes a first corner 210, and FIG. 3 includes a first corner 310.

In some embodiments, to perform burr detection on the first corner of the battery housing more accurately, S110 may include:
obtaining a color image of the first corner of the battery housing;
performing grayscale processing on the color image to obtain a second image; and
performing binarization processing on the second image to obtain the first image.

Herein, the color image may be an RGB image. The second image may be a grayscale image.

Specifically, the first corner portion is highlighted through converting the color image into a grayscale image and then performing binarization processing on the grayscale image.

For example, a pixel value at the R corner in the first image may be 1, and a pixel value at a background may be 0.

In this way, the first corner in the image may be highlighted through preprocessing such as grayscale and binarization on the directly obtained color image of the first corner, thereby facilitating more accurate burr detection on the first corner of the battery housing.

In S120, for burr detection on the curved portion, the target edge contour of the curved portion needs to be extracted.

In some embodiments, in order to perform burr detection on the first corner of the battery housing more accurately, S120 may include:
performing edge detection on the first image to obtain a first edge contour of the first corner;
removing an edge contour segment of a straight portion from the first edge contour to obtain a third image containing a second edge contour; and
determining a target edge contour based on connected components of different regions in the third image.

Herein, the second edge contour may be an edge contour of the curved portion of the first corner. The target edge contour may be an outer edge contour of the curved portion of the first corner.

Specifically, edge detection may be performed on the first image first to obtain the first edge contour of the first corner, and then the edge contour segment of the straight portion is removed from the first edge contour to obtain the second edge contour.

The edge contour of the first corner has a certain width, so the edge contour of the first corner may include an inner edge contour and an outer edge contour. Burrs of the first corner usually only occur on the outer edge contour, so the outer edge contour in the second edge contour may be further extracted and burr detection may be performed based on the outer edge contour. Therefore, the outer edge contour of the curved portion of the first corner, that is, the target edge contour, is determined based on the connected components of different regions in the third image containing the second edge contour.

In this way, the outer edge contour of the curved portion of the first corner may be accurately extracted through the above process, so that burr detection is performed on the first corner more accurately based on the outer edge contour of the curved portion of the first corner.

In some embodiments, in order to accurately determine the first edge contour of the first corner, the above performing edge detection on the first image to obtain a first edge contour of the first corner may include:
performing edge detection on the first image based on a Canny (Canny) edge detection algorithm to obtain the first edge contour of the first corner.

In this way, edge detection is performed on the first image more accurately through the Canny edge detection algorithm, thereby accurately determining the first edge contour of the first corner.

In some embodiments, in order to extract the outer edge contour of the curved portion of the first corner more accurately, the above determining a target edge contour based on connected components of different regions in the third image may include:
sorting connected components corresponding to different regions in the third image in descending order to obtain a connected component sequence; and
determining a region corresponding to a second connected component in the connected component sequence as the target edge contour.

Herein, different regions in the third image may include an outer edge contour of the curved portion, an inner edge contour of the curved portion, and a background region, and may also include some noise.

The background region usually has the largest quantity of pixels, so the background region has the largest quantity of connected components. The noise part usually has the smallest quantity of pixels, so the noise part has the smallest quantity of connected components. Since the outer edge contour of the curved portion is longer than the inner edge contour, the outer edge contour has more pixels than the inner edge contour, and the outer edge contour has more connected components than the inner edge contour.

Based on this, it may be learned that the connected components corresponding to different regions in the third image sorted in descending order are: the connected component of the background region, followed by the connected component of the outer edge contour, then the connected component of the inner edge contour, and finally the connected component of the noise portion.

Therefore, after sorting the connected components corresponding to different regions in the third image in descending order to obtain the connected component sequence, the region corresponding to the second connected component in the connected component sequence may be determined as the outer edge contour of the curved portion, that is, the target edge contour.

In this way, the outer edge contour of the curved portion of the first corner is accurately determined by sorting the connected components corresponding to different regions in the third image in descending order.

In some embodiments, in order to accurately obtain the edge contour of the rounded corner region, the above removing an edge contour segment of a straight portion from the first edge contour to obtain a third image containing a second edge contour may include:
determining the edge contour segment of the straight portion from the first edge contour; and
removing the edge contour segment of the straight portion from the first edge contour to obtain the third image containing the second edge contour.

In this way, the edge contour of the rounded corner region is obtained accurately through removing the edge contour segment of the straight portion from the first edge contour, which facilitates subsequent curve fitting.

In some embodiments, in order to accurately determine the edge contour of the straight portion, the above determining the edge contour segment of the straight portion from the first edge contour may include:
cutting the first edge contour to obtain a plurality of straight line segments;
determining a plurality of first straight line segments with lengths greater than a third threshold from the plurality of straight line segments;
determining a vertical line segment and a horizontal line segment from the plurality of first straight line segments;
determining respective segmentation points based on the vertical line segment and the horizontal line segment to obtain two segmentation points; and
determine an edge contour segment other than an edge contour segment between the two segmentation points in the first edge contour as the edge contour segment of the straight portion.

Herein, the third threshold may be set based on actual requirements.

Since the straight line segment obtained through cutting the curved portion is short, while the straight line segment obtained by cutting the straight portion is relatively long, a plurality of first straight line segments with lengths greater than the third threshold among the plurality of straight line segments may be determined as the straight portion of the first corner.

The straight portion of the first corner may include a horizontal portion and a vertical portion. Therefore, the plurality of first straight line segments may include a horizontal line segment and a vertical line segment.

Since the vertical portion and the horizontal portion in the first corner are usually located at two ends respectively and the curved portion is sandwiched between the vertical portion and the horizontal portion, a segmentation point between the vertical portion and the curved portion and a segmentation point between the horizontal portion and the curved portion may be determined first. An edge contour segment located between the two segmentation points is the edge contour segment of the curved portion, that is, the second edge contour.

In this way, the edge contour segment of the straight portion in the first edge contour is accurately determined through the above process.

In some embodiments, in order to accurately cut the first edge contour into a plurality of straight line segments, the above cutting the first edge contour to obtain a plurality of straight line segments may include:
performing Hough (Hough) transform on an image in which the first edge contour is located to obtain endpoint coordinates corresponding to the plurality of straight line segments respectively; and
determining the plurality of straight line segments based on the endpoint coordinates corresponding to the plurality of straight line segments respectively.

In this way, the first edge contour may be accurately cut into a plurality of straight line segments through Hough transform.

In some embodiments, in order to accurately determine the vertical line segment and horizontal line segment in the plurality of first straight line segments, the determining a vertical line segment and a horizontal line segment from the plurality of first straight line segments may include:
determining the vertical line segment and the horizontal line segment from the plurality of first straight line segments based on a difference in abscissa and a difference in ordinate between two endpoints corresponding to each first straight line segment.

Herein, for each first straight line segment, the first straight line segment may be determined as a vertical line segment if the difference in abscissa between two endpoints of the first straight line segment is less than a first preset difference and/or the difference in ordinate is greater than a second preset difference, for example, the difference in abscissa is 0 and/or the difference in ordinate is greater than 0; and the first straight line segment may be determined as a horizontal line segment if the difference in ordinate between the two endpoints of the first straight line segment is less than the first preset difference and/or the difference in abscissa is greater than the second preset difference, for example, the difference in ordinate is 0 and/or the difference in abscissa is greater than 0.

The first preset difference and the second preset difference may be set according to actual requirements.

In this way, the vertical line segment and horizontal line segment therein are accurately determined based on the difference in abscissa and the difference in ordinate of each first straight line segment.

In some embodiments, in order to improve accuracy of determining the two segmentation points, the determining respective segmentation points based on the vertical line segment and the horizontal line segment to obtain two segmentation points may include:
determining a first segmentation point based on an ordinate of a part at which a straight line containing the vertical line segment overlaps with the first edge contour;
determining a second segmentation point based on an abscissa of a part at which a straight line containing the horizontal line segment overlaps with the first edge contour; and
determining the first segmentation point and the second segmentation point as the two segmentation points.

Herein, if the vertical line segment is in a first direction of the curved portion and a positive direction of a y-axis is the first direction, a point corresponding to a minimum ordinate of a part at which a straight line containing the vertical line segment overlaps with the first edge contour may be determined as the first segmentation point; and if the vertical line segment is in the first direction of the curved portion and the positive direction of the y-axis is a second direction, a point corresponding to a maximum ordinate of the part at which the straight line containing the vertical line segment overlaps with the first edge contour may be determined as the first segmentation point. The first direction is opposite to the second direction. For example, the first direction is upward or downward.

If the horizontal line segment is in a third direction of the curved portion and a positive direction of an x-axis is the third direction, a point corresponding to a minimum abscissa of a part at which a straight line containing the horizontal line segment overlaps with the first edge contour may be determined as the second segmentation point; and if the horizontal line segment is in the third direction of the curved portion and the positive direction of the x-axis is a fourth direction, a point corresponding to a maximum abscissa of a part at which the straight line containing the horizontal line segment overlaps with the first edge contour is located may be determined as the second segmentation point. The third direction is opposite to the fourth direction. For example, the third direction is leftward or rightward.

In this way, accuracy of determining the two segmentation points is further improved through the above process, thereby obtaining the edge contour of the curved portion of the first corner through more accurate segmentation.

In S130, curve fitting may include circular fitting and may also include quadratic curve fitting. The target curve may include a target circle and may also include a target quadratic curve.

In the related art, typically, a shape of a corner of a battery housing is approximately modeled as a straight line inclined at 45°. Then, for each point on the outer edge of the corner, sampling is performed in a lower left direction at 45° at a unit distance of 1 until the inner edge is sampled. A sampled distance is calculated, and this distance is used as the criterion for judging whether burrs are present. If a sampled distance for a certain point on the outer edge is greater than a preset threshold, it is determined that burrs are present. If a sampled distance for each point on the outer edge is not greater than the preset threshold, it is determined that burrs are not present. However, this processing method is time-consuming, with a processing time for each image greater than 1s. Moreover, using a straight line to fit the corner of the battery housing leads to a large error, and therefore the detection is inaccurate. In addition, since dimensions of the corners of different battery housings are different, the above preset threshold is difficult to set.

Through observation, it may be found that burrs at the corners of the battery housing usually only appear on the outer edge. Therefore, when performing burr detection on the corners of the battery housing, to determine whether burrs are present at the corners of the battery housing, only a shape of the outer edge of the corner may be considered. Moreover, the shape of the curved portion of the corner of the battery housing is similar to a 1/4 circular arc. Therefore, in the embodiments of this application, curve fitting is performed on the feature points of the target edge contour of the first corner, which significantly improves the accuracy of burr detection and reduces a miss rate. Further, because the detection method for battery housing provided in the embodiments of this application performs direct calculation instead of simulated sampling, the detection efficiency is also significantly improved; and a preset threshold is not set based on the thickness of the corner of the battery housing, so the problem that the preset threshold is difficult to set is avoided.

In S140, whether burrs are present on the first corner may be determined based on the target circle, and whether burrs are present on the first corner may also be determined based on the target quadratic curve. If it is determined, based on either the target circle or the target quadratic curve, that burrs are present on the first corner, it is determined that burrs are present on the first corner. If it is determined, based on both the target circle and the target quadratic curve, that burrs are not present on the first corner, it is determined that burrs are not present on the first corner.

In some embodiments, in order to accurately determine whether burrs are present on the first corner, as shown in FIG. 4, S130 may include the following step.

S410. Perform circular fitting based on two endpoints of the target edge contour to obtain a target circle.

S140 may include the following steps.

S420. Calculate a difference between a radius of the target circle and a distance between a point on the target edge contour and a center of the target circle.

S430. Determine whether burrs are present on the first corner based on the difference corresponding to the point on the target edge contour.

In the related art, when performing circular fitting, three points are usually taken on the curve, and two adjacent points among the three points are used as endpoints to form two line segments. After determining the perpendicular bisectors corresponding to the two line segments respectively, the intersection point of the two perpendicular bisectors is the center.

However, in actual situations, the selection of the three points is difficult. After the two endpoints of the target edge contour are selected, determining of a third point is difficult because a position of a center relative to the target edge contour is unknown, and a point cannot be arbitrarily taken in the middle of the target edge contour. If the third point is excessively close to the two endpoints, the fitting circle calculation fails, meaning that the calculation method is unstable. Therefore, in order to stably calculate an approximate fitting circle of the first corner, the following assumptions may be made based on the actual distribution of the data: a first endpoint of the target edge contour is an uppermost point of the fitting circle, and burrs are not present at the two endpoints of the target edge contour. Based on these assumptions, only the two endpoints of the target edge contour are taken to determine the position of the center, thereby obtaining the target circle. This ensures stability of the fitting circle calculation.

Specifically, during circular fitting, it may be assumed that in the two endpoints of the target edge contour, an upper first endpoint is an uppermost point in the target circle. Based on this, a vertical line passing through the first endpoint may be drawn, and then a point on the vertical line that is equidistant from the first endpoint and the second endpoint is determined as the center of the target circle. A distance from the first endpoint to the center or a distance from the second endpoint to the center is determined as the radius of the target circle, and then the target circle is obtained. The second endpoint is an endpoint other than the first endpoint in the two endpoints of the target edge contour.

Then, differences between a radius of the target circle and distances between all points on the target edge contour and the center of the target circle are traversed, and whether burrs are present on the first corner is determined based on the difference corresponding to each point on the target edge contour.

In this way, through circular fitting based on the two endpoints of the target edge contour, whether burrs are present on the first corner is accurately determined based on the difference between the radius of the target circle and the distance between each point on the target edge contour and the center of the target circle.

In some embodiments, in order to accurately determine whether burrs are present on the first corner, the determining whether burrs are present on the first corner based on the difference corresponding to the point on the target edge contour may include:
determining that burrs are present at a first point in a case that a difference corresponding to the first point on the target edge contour is greater than a first threshold.

Herein, the first threshold may be set according to actual requirements. For example, the first threshold may be equal to 0.

Specifically, coordinates of each point on the target edge contour may be traversed to determine whether they satisfy the following formula: $\sqrt{{\left(x-{x}_{0}\right)}^{2} + {\left(y-{y}_{0}\right)}^{2}} - r > {thresh}_{1} ,$ where
(x, y) indicates a coordinate of any point on the target edge contour, (*x*₀, *y*₀) indicates the center of the target circle, r indicates the radius of the target circle, and *thresh*₁ indicates the first threshold.

If the coordinate of the first point on the target edge contour satisfies the above formula, it is determined that burrs are present at the first point; if there is no point on the target edge contour whose coordinate satisfies the above formula, it is determined that burrs are not present on the first corner.

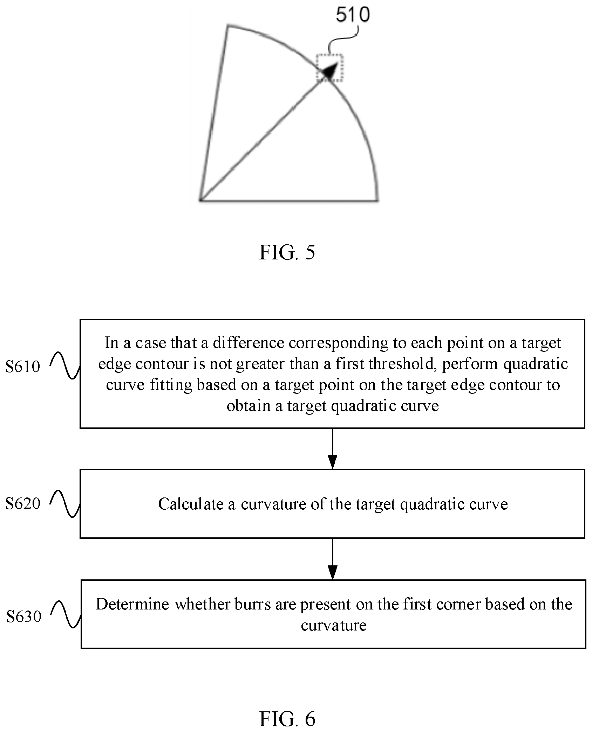

For example, the burrs may be as shown in a dashed box 510 in FIG. 5.

In this way, whether burrs are present on the first corner is accurately determined by determining whether the difference between the radius of the target circle and the distance between each point on the target edge contour and the center of the target circle exceeds the first threshold.

In some embodiments, in order to further determine whether burrs are present on the first corner, after the above calculation of the difference between the radius of the target circle and the distance between the point on the target edge contour and the center of the target circle, as shown in FIG. 6, the method may further include the following steps.

S610. In a case that the difference corresponding to each point on the target edge contour is not greater than the first threshold, perform quadratic curve fitting based on a target point on the target edge contour to obtain the target quadratic curve.

S620. Calculate a curvature of the target quadratic curve.

S630. Determine whether burrs are present on the first corner based on the curvature.

Herein, the difference corresponding to each point on the target edge contour not greater than the first threshold may indicate that no burr is detected on the target edge contour based on circular fitting.

The target point may include at least three points. The target point may specifically include at least three consecutive points.

Specifically, every three consecutive points on the target edge contour are traversed. For any three consecutive points, quadratic curve fitting may be performed based on the following parametric equation: $\left\{\begin{matrix}x = {a}_{1} + {a}_{2} t + {a}_{3} {t}^{2} \\ y = {b}_{1} + {b}_{2} t + {b}_{3} {t}^{2}\end{matrix}\right.$

Specifically, the coordinates of the above three consecutive points may be substituted into (x, y) in the above parametric equation, and coefficients *a*₁, *a*₂, *a*₃, *b*₁, *b*₂, *b*₃ and the time parameter t are solved to obtain the target quadratic curve. The fitting calculation may be completed by matrix inversion.

Then, the curvature of the target quadratic curve may be calculated according to the following formula: $κ = \frac{x " y ′ - x ′ y "}{{\left({\left(x′\right)}^{2}+{\left(y′\right)}^{2}\right)}^{3 / 2}} = \frac{2 \left({a}_{3}{b}_{2}-{a}_{2}{b}_{3}\right)}{{\left({a}_{2}^{2}+{b}_{2}^{2}\right)}^{3 / 2}} ,$ where
k indicates the curvature of the target quadratic curve.

In this way, since curvature change reflects smoothness of a curve, on the basis of determining whether burrs are present on the first corner based on the curvature of the target quadratic curve, whether small and discontinuous burrs are present on the first corner may be further detected.

In some embodiments, in order to further determine whether burrs are present on the first corner, the above determining whether burrs are present on the first corner based on the curvature may include:
determining that burrs are present on an edge contour segment corresponding to the target point in a case that a curvature is greater than a second threshold.

Herein, the second threshold may be set according to actual requirements.

In addition, in a case that the curvature is not greater than the second threshold, it may be determined that no burr is present on the edge contour segment corresponding to the target point.

Specifically, whether the curvature of the target quadratic curve is greater than the second threshold may be determined according to the following formula: $κ = \frac{x " y ′ - x ′ y "}{{\left({\left(x′\right)}^{2}+{\left(y′\right)}^{2}\right)}^{3 / 2}} = \frac{2 \left({a}_{3}{b}_{2}-{a}_{2}{b}_{3}\right)}{{\left({a}_{2}^{2}+{b}_{2}^{2}\right)}^{3 / 2}} > {thresh}_{2} ,$ where
k indicates the curvature of the target quadratic curve and *thresh*₂ indicates the second threshold.

If *κ* > *thresh*₂, it is determined that burrs are present on the edge contour segment corresponding to the above three consecutive points. If *κ* ≥ *thresh*₂, it is determined that no burr is present on the edge contour segment corresponding to the above three consecutive points.

After traversing every three consecutive points on the target edge contour, whether burrs are present on the target edge contour may be determined.

Herein, whether burrs are present on the first corner may be determined first based on circular fitting. If it is determined based on circular fitting that burrs are present on the first corner, quadratic curve fitting is not required. If it is determined based on circular fitting that no burr is present on the first corner, quadratic curve fitting may be further performed to determine whether burrs are present on the first corner based on quadratic curve fitting.

In this way, whether small and discontinuous burrs are present on the edge contour segment is accurately determined by determining whether the curvature of the target quadratic curve exceeds the second threshold.

In some embodiments, before the performing circular fitting based on two endpoints of the target edge contour to obtain a target circle, the method may further include:
performing quadratic curve fitting based on a target point on the target edge contour to obtain a target quadratic curve, where the target point includes at least three points; and
calculating a curvature of the target quadratic curve.

The performing circular fitting based on two endpoints of the target edge contour to obtain a target circle may include:
performing circular fitting based on the two endpoints of the target edge contour to obtain the target circle in a case that the curvature is not greater than a second threshold.

Herein, quadratic curve fitting may be performed first. If it is determined based on the quadratic curve fitting that burrs are present on the first corner, circular fitting is not performed. If it is determined based on the quadratic curve fitting that no burr is present on the first corner, circular fitting may be further performed to determine whether burrs are present on the first corner based on circular fitting.

For the specific process, reference may be made to the above embodiments and details are not repeated herein.

In this way, a curvature of the target quadratic curve not greater than the second threshold may characterize that no small and continuous burrs are present on the first corner. Therefore, the target quadratic curve may be fitted first. If no burr is detected based on the target quadratic curve, circular fitting is performed to further detect whether burrs are present on the first corner.

In some embodiments, after the calculating a curvature of the target quadratic curve, the method may further include:
determining that burrs are present on an edge contour segment corresponding to the target point in a case that a curvature is greater than a second threshold.

For the specific process, reference may be made to the above embodiments and details are not repeated herein.

In this way, a curvature of the target quadratic curve greater than the second threshold may characterize that small and continuous burrs are present on the first corner. Therefore, if the curvature of the target quadratic curve is greater than the second threshold, it may be determined that burrs are present on the edge contour segment corresponding to the target point without performing subsequent detection, thereby saving time and improving detection efficiency.

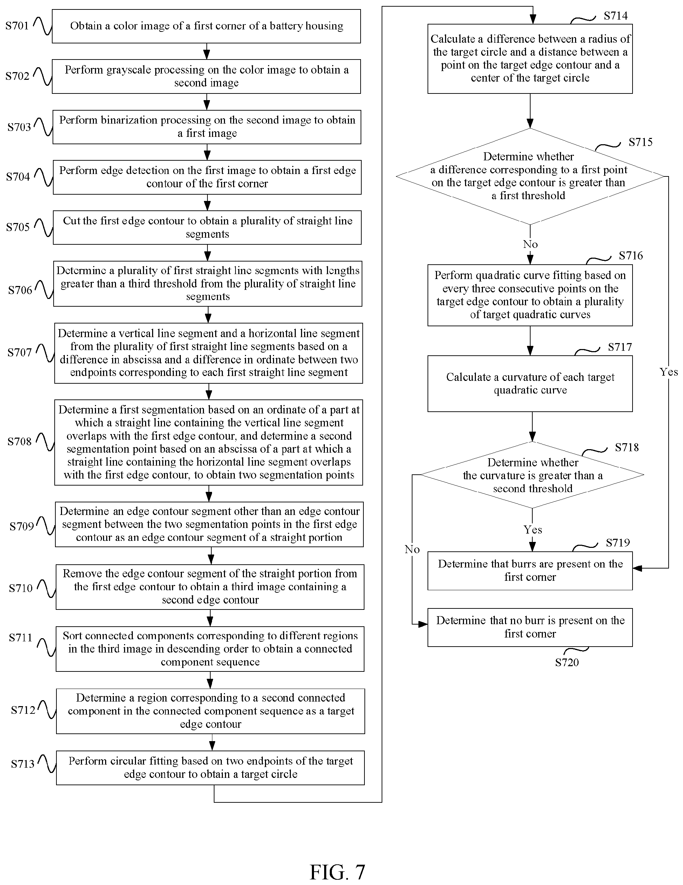

In order to better describe the entire solution, based on the above embodiments, a specific example is given. As shown in FIG. 7, the detection method for battery housing may include S701 to S720.

S701. Obtain a color image of a first corner of a battery housing.

S702. Perform grayscale processing on the color image to obtain a second image.

S703. Perform binarization processing on the second image to obtain a first image.

S704. Perform edge detection on the first image to obtain a first edge contour of the first corner.

S705. Cut the first edge contour to obtain a plurality of straight line segments.

S706. Determine a plurality of first straight line segments with lengths greater than a third threshold from the plurality of straight line segments.

S707. Determine a vertical line segment and a horizontal line segment from the plurality of first straight line segments based on a difference in abscissa and a difference in ordinate between two endpoints corresponding to each first straight line segment.

S708. Determine a first segmentation based on an ordinate of a part at which a straight line containing the vertical line segment overlaps with the first edge contour, and determine a second segmentation point based on an abscissa of a part at which a straight line containing the horizontal line segment overlaps with the first edge contour, to obtain two segmentation points.

S709. Determine an edge contour segment other than an edge contour segment between the two segmentation points in the first edge contour as an edge contour segment of a straight portion.

S710. Remove the edge contour segment of the straight portion from the first edge contour to obtain a third image containing a second edge contour.

S711. Sort connected components corresponding to different regions in the third image in descending order to obtain a connected component sequence.

S712. Determine a region corresponding to a second connected component in the connected component sequence as a target edge contour.

S713. Perform circular fitting based on two endpoints of the target edge contour to obtain a target circle.

S714. Calculate a difference between a radius of the target circle and a distance between a point on the target edge contour and a center of the target circle.

S715. Determine whether a difference corresponding to a first point on the target edge contour is greater than a first threshold.

If the difference is greater than the first threshold, S719 is executed. Otherwise, S716 is executed.

S716. Perform quadratic curve fitting based on every three consecutive points on the target edge contour to obtain a plurality of target quadratic curves.

S717. Calculate a curvature of each target quadratic curve.

S718. Determine whether a curvature is greater than a second threshold.

If the curvature is greater than the second threshold, S719 is executed. Otherwise, S720 is executed.

S719. Determine that burrs are present on the first corner.

S720. Determine that no burr is present on the first corner.

For the specific process and meaning of the steps, reference may be made to the above embodiments and details are not be repeated herein.

The detection method for battery housing provided in the embodiments of this application effectively improves the accuracy of burr detection, reduce a miss rate, and reduce algorithm running time. Specifically, in the detection method for battery housing provided in the embodiments of this application, two rounds of determining are implemented. First, large and obvious burr protrusions are accurately detected through circular fitting, and then inconspicuous small burrs are detected through curvature calculation, which greatly improves the accuracy and application range of burr detection and stability is stronger.

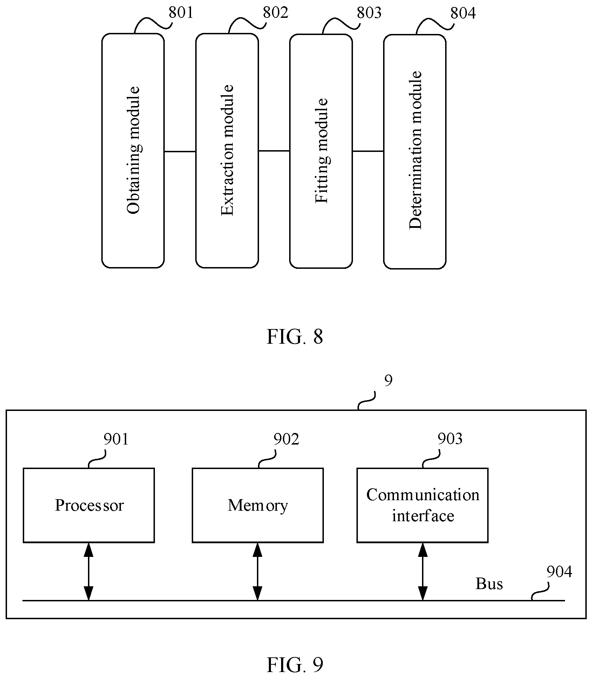

Based on the same inventive concept, the embodiments of this application also provide a detection apparatus for battery housing. The detection apparatus for battery housing provided in the embodiments of this application is described in detail below with reference to FIG. 8.

FIG. 8 shows a schematic structural diagram of a detection apparatus for battery housing provided in an embodiment of this application.

As shown in FIG. 8, the detection apparatus for battery housing may include:
an obtaining module 801, configured to obtain a first image of a first corner of a battery housing, where the first corner is a rounded corner;
an extraction module 802, configured to extract a target edge contour of a curved portion of the first corner in the first image;
a fitting module 803, configured to perform curve fitting based on a feature point of the target edge contour to obtain a target curve; and
a determination module 804, configured to determine whether burrs are present on the first corner based on the target curve.

In this way, the first image of the first corner of the battery housing is obtained; then the target edge contour of the curved portion of the first corner in the first image is extracted; curve fitting is performed based on the feature point of the target edge contour to obtain the target curve; and whether burrs are present on the first corner is determined based on the target curve. In this way, whether burrs are present at a corner of the battery housing is detected more accurately through curve fitting.

In some embodiments, in order to accurately determine whether burrs are present on the first corner, the fitting module 803 may include:
a first fitting submodule, configured to perform circular fitting based on two endpoints of the target edge contour to obtain a target circle.

The determination module 804 may include:
a first calculation submodule, configured to calculate a difference between a radius of the target circle and a distance between a point on the target edge contour and a center of the target circle; and
a first determination submodule, configured to determine whether burrs are present on the first corner based on a difference corresponding to a point on the target edge contour.

In some embodiments, in order to accurately determine whether burrs are present on the first corner, the first determination submodule may include:
a first determination unit, configured to determine that burrs are present at a first point in a case that a difference corresponding to the first point on the target edge contour is greater than a first threshold.

In some embodiments, in order to further determine whether burrs are present on the first corner, the detection apparatus for battery housing may further include:
a second fitting submodule, configured to: after calculating the difference between the radius of the target circle and the distance between a point on the target edge contour and the center of the target circle, in a case that a difference corresponding to each point on the target edge contour is not greater than the first threshold, perform quadratic curve fitting based on a target point on the target edge contour to obtain a target quadratic curve, where the target point includes at least three points;
a second calculation submodule, configured to calculate a curvature of the target quadratic curve; and
a second determination submodule, configured to determine whether burrs are present on the first corner based on the curvature.

In some embodiments, in order to further determine whether burrs are present on the first corner, the second determination submodule may include:
a second determination unit, configured to determine that burrs are present on an edge contour segment corresponding to the target point in a case that the curvature is greater than a second threshold.

In some embodiments, the detection apparatus for battery housing may further include:
a third fitting submodule, configured to: before performing circular fitting based on two endpoints of the target edge contour to obtain a target circle, perform quadratic curve fitting based on a target point on the target edge contour to obtain a target quadratic curve, where the target point includes at least three points; and
a third calculation submodule, configured to calculate a curvature of the target quadratic curve.

The first fitting submodule may include:
a fitting unit, configured to perform circular fitting based on the two endpoints of the target edge contour to obtain the target circle in a case that the curvature is not greater than the second threshold.

In some embodiments, the detection apparatus for battery housing may further include:
a third determination submodule, configured to determine that burrs are present on an edge contour segment corresponding to the target point in a case that the curvature is greater than a second threshold.

In some embodiments, in order to perform burr detection on the first corner of the battery housing more accurately, the obtaining module 801 may include:
an obtaining submodule, configured to obtain a color image of the first corner of the battery housing;
a grayscale submodule, configured to perform grayscale processing on the color image to obtain a second image; and
a binarization submodule, configured to perform binarization processing on the second image to obtain the first image.

In some embodiments, in order to perform burr detection on the first corner of the battery housing more accurately, the extraction module 802 may include:
an edge detection submodule, configured to perform edge detection on the first image to obtain the first edge contour of the first corner;
a removal submodule, configured to remove an edge contour segment of a straight portion from the first edge contour to obtain a third image containing a second edge contour, where the second edge contour is an edge contour of the curved portion of the first corner; and
a fourth determination submodule, configured to determine a target edge contour based on connected components of different regions in the third image, where the target edge contour is the outer edge contour of the curved portion of the first corner.

In some embodiments, in order to accurately determine the first edge contour of the first corner, the edge detection submodule may include:
an edge detection unit, configured to perform edge detection on the first image based on a Canny edge detection algorithm to obtain a first edge contour of the first corner.

In some embodiments, in order to accurately obtain the edge contour of the rounded corner region, the removal submodule may include:
a third determination unit, configured to determine an edge contour segment of a straight portion from the first edge contour; and
a removal unit, configured to remove the edge contour segment of the straight portion from the first edge contour to obtain the third image containing the second edge contour.

In some embodiments, in order to accurately determine the edge contour of the straight portion, the removal unit may include:
a cutting subunit, configured to cut the first edge contour to obtain a plurality of straight line segments;
a first determination subunit, configured to determine a plurality of first straight line segments with lengths greater than a third threshold from the plurality of straight line segments;
a second determination subunit, configured to determine a vertical line segment and a horizontal line segment from the plurality of first straight line segments;
a third determination subunit, configured to determine respective segmentation points based on the vertical line segment and the horizontal line segment to obtain two segmentation points; and
a fourth determination subunit, configured to determine an edge contour segment other than an edge contour segment between the two segmentation points in the first edge contour as an edge contour segment of the straight portion.

In some embodiments, in order to accurately determine the vertical line segment and horizontal line segment in the plurality of first straight line segments, the second determination subunit may be specifically configured to:
determine a vertical line segment and a horizontal line segment from the plurality of first straight line segments based on a difference in abscissa and a difference in ordinate between two endpoints corresponding to each first straight line segment.

In some embodiments, in order to accurately cut the first edge contour into a plurality of straight line segments, the cutting subunit may be specifically configured to:
perform Hough transform on an image containing the first edge contour to obtain endpoint coordinates corresponding to the plurality of straight line segments respectively; and
determine the plurality of straight line segments based on the endpoint coordinates corresponding to the plurality of straight line segments respectively.

In some embodiments, in order to determine the two segmentation points more accurately, the third determination subunit may include:
a fifth determination subunit, configured to determine a first segmentation point based on an ordinate of a part at which a straight line containing the vertical line segment overlaps with the first edge contour;
a sixth determination subunit, configured to determine a second segmentation point based on an abscissa of a part at which a straight line containing the horizontal line segment overlaps with the first edge contour; and
a seventh determination subunit, configured to determine the first segmentation point and the second segmentation point as the two segmentation points.

In some embodiments, in order to extract the outer edge contour of the curved portion of the first corner more accurately, the fourth determination submodule may include:
a sorting unit, configured to sort connected components corresponding to different regions in the third image in descending order to obtain a connected component sequence; and
a fourth determination unit, configured to determine a region corresponding to a second connected component in the connected component sequence as the target edge contour.

FIG. 9 is a schematic structural diagram of an electronic device provided in an embodiment of this application.

FIG. 9 is a structural diagram of an exemplary hardware architecture of an electronic device 9 that implements an electronic device according to the detection method for battery housing and detection apparatus for battery housing in the embodiments of this application. The electronic device may refer to the electronic device in the embodiments of this application.

The electronic device 9 may include a processor 901 and a memory 902 storing computer program instructions.

Specifically, the above processor 901 may include a central processing unit (CPU), or an application specific integrated circuit (Application Specific Integrated Circuit, ASIC), or may be configured to implement one or more integrated circuits of the embodiments of this application.

The memory 902 may include a mass storage for data or instructions. By way of example and not limitation, the memory 902 may include a hard disk drive (Hard Disk Drive, HDD), a floppy disk drive, a flash memory, an optical disk, a magneto-optical disk, a magnetic tape, or a universal serial bus (Universal Serial Bus, USB) drive or a combination of two or more of the above. Where appropriate, the memory 902 may include a removable or non-removable (or fixed) medium. Where appropriate, the memory 902 may be internal or external to an integrated gateway disaster recovery device. In a specific embodiment, the memory 902 is a non-volatile solid-state memory. In a specific embodiment, the memory 902 may include a read-only memory (ROM), a random access memory (RAM), a magnetic storage medium device, an optical storage medium device, a flash memory device, an electrical, optical or other physical/tangible memory storage device. Therefore, in general, the memory 902 includes one or more tangible (non-transitory) computer-readable storage media (such as a storage device) encoded with software including computer-executable instructions, and when the software is executed (for example, by one or more processors), it is operable to perform the operations described with reference to the method according to an aspect of this application.

The processor 901 implements any one of the detection methods for battery housing in the above embodiments by reading and executing the computer program instructions stored in the memory 902.

In an example, the electronic device may further include a communication interface 903 and a bus 904. As shown in FIG. 9, the processor 901, the memory 902, and the communication interface 903 are connected through the bus 904 and communicate with each other.

The communication interface 903 is mainly used to implement communication between various modules, apparatuses, units and/or devices in the embodiments of this application.

The bus 904 includes hardware, software, or both, and couples the components of the electronic device to each other. By way of example and not limitation, the bus may include an accelerated graphics port (AGP) or other graphics bus, an enhanced industry standard architecture (EISA) bus, a front side bus (FSB), a hyper transport (HT) interconnect, an industry standard architecture (ISA) bus, an unlimited bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local (VLB) bus, or other suitable buses or a combination of two or more of the above. Where appropriate, the bus 904 may include one or more buses. Although a specific bus is described and illustrated in the embodiments of this application, any suitable bus or interconnect is considered in this application.

The electronic device is enabled to execute the detection method for battery housing in the embodiments of this application, thereby implementing the detection method and apparatus for battery housing described with reference to FIG. 1 to FIG. 8.

In addition, with reference to the detection method for battery housing in the above embodiments, the embodiments of this application provide a computer storage medium for implementation. Computer program instructions are stored on the computer storage medium; and when the computer program instructions are executed by a processor, any one of the detection methods for battery housing in the above embodiments is implemented.

It should be clear that this application is not limited to the specific configurations and processes described above and shown in the figures. For brevity, detailed descriptions of known methods are omitted herein. In the above embodiments, several specific steps are described and shown as examples. However, the method process of this application is not limited to the specific steps described and shown. Those skilled in the art may make various changes, modifications and additions, or change the order between steps after understanding the spirit of this application.

The functional blocks shown in the structural block diagrams described above may be implemented as hardware, software, firmware or a combination thereof. When implemented in hardware, it may be, for example, an electronic circuit, an application specific integrated circuit (ASIC), appropriate firmware, a plug-in, or a function card. When implemented in software, the elements of this application are programs or code segments used to perform the required tasks. The program or code segment may be stored in a machine-readable medium or transmitted as a data signal carried in a carrier wave over a transmission medium or a communication link. A "machine-readable medium" may include any medium capable of storing or transmitting information. Examples of machine-readable media include an electronic circuit, a semiconductor memory device, a ROM, a flash memory, an erasable ROM (EROM), a floppy disk, a CD-ROM, an optical disk, a hard disk, an optical fiber medium, a radio frequency (RF) link, and the like. The code segment may be downloaded via computer networks such as the Internet and an intranet.

It should also be noted that the exemplary embodiments mentioned in this application describe some methods or systems based on a series of steps or apparatuses. However, this application is not limited to the order of the above steps, that is, the steps may be performed in the order mentioned in the embodiments, or in an order different from that in the embodiments, or several steps may be performed simultaneously.

The aspects of this application are described above with reference to the flowcharts and/or block diagrams of the methods, apparatuses (systems) and computer program products according to the embodiments of this application. It should be understood that each block in the flowcharts and/or block diagrams and combinations of blocks in the flowcharts and/or block diagrams may be implemented by computer program instructions. These computer program instructions may be provided to a processor of a general-purpose computer, a special-purpose computer, or other programmable data processing apparatus to produce a machine, so that the instructions executed by the processor of the computer or another programmable data processing apparatus enable the implementation of the functions/actions specified in one or more blocks of the flowcharts and/or block diagrams. Such a processor may be, but is not limited to, a general-purpose processor, a dedicated processor, a special application processor, or a field programmable logic circuit. It is further understood that each block in the block diagrams and/or flowcharts and combinations of blocks in the block diagrams and/or flowcharts may also be implemented by dedicated hardware that performs specified functions or actions, or may be implemented by a combination of dedicated hardware and computer instructions.

Although this application has been described with reference to the preferred embodiments, various improvements may be made to it without departing from the scope of this application and the components therein may be replaced with equivalents. In particular, as long as there is no structural conflict, the technical features mentioned in the embodiments may be combined in any way. This application is not limited to the specific embodiments disclosed herein, but includes all technical solutions falling within the scope of the claims.

## Claims

1. A detection method for battery housing, comprising:
obtaining a first image of a first corner of a battery housing, wherein the first corner is a rounded corner;
extracting a target edge contour of a curved portion of the first corner in the first image;
performing curve fitting based on a feature point of the target edge contour to obtain a target curve; and
determining whether burrs are present on the first corner based on the target curve.

2. The method according to claim 1, wherein the performing curve fitting based on a feature point of the target edge contour to obtain a target curve comprises:
performing circular fitting based on two endpoints of the target edge contour to obtain a target circle; and
the determining whether burrs are present on the first corner based on the target curve comprises:
calculating a difference between a radius of the target circle and a distance between a point on the target edge contour and a center of the target circle; and
determining whether burrs are present on the first corner based on the difference corresponding to the point on the target edge contour.

3. The method according to claim 2, wherein the determining whether burrs are present on the first corner based on the difference corresponding to the point on the target edge contour comprises:
determining that burrs are present at a first point in a case that a difference corresponding to the first point on the target edge contour is greater than a first threshold.

4. The method according to claim 3, wherein after the calculating a difference between a radius of the target circle and a distance between a point on the target edge contour and a center of the target circle, the method further comprises:
in a case that a difference corresponding to each point on the target edge contour is not greater than the first threshold, performing quadratic curve fitting based on a target point on the target edge contour to obtain a target quadratic curve, wherein the target point comprises at least three points;
calculating a curvature of the target quadratic curve; and
determining whether burrs are present on the first corner based on the curvature.

5. The method according to claim 4, wherein the determining whether burrs are present on the first corner based on the curvature comprises:
determining that burrs are present on an edge contour segment corresponding to the target point in a case that the curvature is greater than a second threshold.

6. The method according to claim 2, wherein before the performing circular fitting based on two endpoints of the target edge contour to obtain a target circle, the method further comprises:
performing quadratic curve fitting based on a target point on the target edge contour to obtain a target quadratic curve, wherein the target point comprises at least three points; and
calculating a curvature of the target quadratic curve; and
the performing circular fitting based on two endpoints of the target edge contour to obtain a target circle comprises:
performing circular fitting based on the two endpoints of the target edge contour to obtain the target circle in a case that the curvature is not greater than a second threshold.

7. The method according to claim 6, wherein the method further comprises:
determining that burrs are present on an edge contour segment corresponding to the target point in a case that the curvature is greater than the second threshold.

8. The method according to any one of claims 1 to 7, wherein the obtaining a first image of a first corner of a battery housing comprises:
obtaining a color image of the first corner of the battery housing;
performing grayscale processing on the color image to obtain a second image; and
performing binarization processing on the second image to obtain the first image.

9. The method according to any one of claims 1 to 8, wherein the extracting an edge contour of a curved portion of the first corner in the first image comprises:
performing edge detection on the first image to obtain a first edge contour of the first corner;
removing an edge contour segment of a straight portion from the first edge contour to obtain a third image containing a second edge contour, wherein the second edge contour is an edge contour of the curved portion of the first corner; and
determining the target edge contour based on connected components of different regions in the third image, wherein the target edge contour is an outer edge contour of the curved portion of the first corner.

10. The method according to claim 9, wherein the performing edge detection on the first image to obtain a first edge contour of the first corner comprises:
performing edge detection on the first image based on a Canny edge detection algorithm to obtain the first edge contour of the first corner.

11. The method according to claim 9 or 10, wherein the removing an edge contour segment of a straight portion from the first edge contour to obtain a third image containing a second edge contour comprises:
determining the edge contour segment of the straight portion from the first edge contour; and
removing the edge contour segment of the straight portion from the first edge contour to obtain the third image containing the second edge contour.

12. The method according to claim 11, wherein the determining the edge contour segment of the straight portion from the first edge contour comprises:
cutting the first edge contour to obtain a plurality of straight line segments;
determining a plurality of first straight line segments with lengths greater than a third threshold from the plurality of straight line segments;
determining a vertical line segment and a horizontal line segment from the plurality of first straight line segments;
determining respective segmentation points based on the vertical line segment and the horizontal line segment to obtain two segmentation points; and
determining an edge contour segment other than an edge contour segment between the two segmentation points in the first edge contour as the edge contour segment of the straight portion.

13. The method according to claim 12, wherein the determining a vertical line segment and a horizontal line segment from the plurality of first straight line segments comprises:
determining the vertical line segment and the horizontal line segment from the plurality of first straight line segments based on a difference in abscissa and a difference in ordinate between two endpoints corresponding to each first straight line segment.

14. The method according to claim 12 or 13, wherein the cutting the first edge contour to obtain a plurality of straight line segments comprises:
performing Hough transform on an image containing the first edge contour to obtain respective endpoint coordinates corresponding to the plurality of straight line segments; and
determining the plurality of straight line segments based on the respective endpoint coordinates corresponding to the plurality of straight line segments.

15. The method according to any one of claims 12 to 14, wherein the determining respective segmentation points based on the vertical line segment and the horizontal line segment to obtain two segmentation points comprises:
determining a first segmentation point based on an ordinate of a part at which a straight line containing the vertical line segment overlaps with the first edge contour;
determining a second segmentation point based on an abscissa of a part at which a straight line containing the horizontal line segment overlaps with the first edge contour; and
determining the first segmentation point and the second segmentation point as the two segmentation points.

16. The method according to any one of claims 9 to 15, wherein the determining the target edge contour based on connected components of different regions in the third image comprises:
sorting connected components corresponding to different regions in the third image in descending order to obtain a connected component sequence; and
determining a region corresponding to a second connected component in the connected component sequence as the target edge contour.

17. A detection apparatus for battery housing, wherein the apparatus comprises:
an obtaining module, configured to obtain a first image of a first corner of a battery housing, wherein the first corner is a rounded corner;
an extraction module, configured to extract a target edge contour of a curved portion of the first corner in the first image;
a fitting module, configured to perform curve fitting based on a feature point of the target edge contour to obtain a target curve; and
a determination module, configured to determine whether burrs are present on the first corner based on the target curve.

18. An electronic device, wherein the device comprises a processor and a memory storing computer program instructions; and
when the processor executes the computer program instructions, the detection method for battery housing according to any one of claims 1 to 16 is implemented.

19. A computer storage medium, wherein computer program instructions are stored on the computer storage medium, and when a processor executes the computer program instructions, the detection method for battery housing according to any one of claims 1 to 16 is implemented.

20. A computer program product, wherein when a processor of an electronic device executes instructions in the computer program product, the electronic device is enabled to perform the detection method for battery housing according to any one of claims 1 to 16.
